(19) Europäisches Patentamt
European Patent Office
Office européen des brevets

(11) Publication number: **0 483 332 B1**

(12) # EUROPEAN PATENT SPECIFICATION

(45) Date of publication of patent specification: **21.09.94**

(51) Int. Cl.[5]: **C02F 1/46**, C25C 7/04

(21) Application number: **91909911.9**

(22) Date of filing: **23.05.91**

(86) International application number: **PCT/EP91/00935**

(87) International publication number: **WO 91/18837 (12.12.91 91/28)**

(54) **ELECTROLYTIC CELL FOR WASTE WATER TREATMENT.**

(30) Priority: **25.05.90 EP 90810384**

(43) Date of publication of application: **06.05.92 Bulletin 92/19**

(45) Publication of the grant of the patent: **21.09.94 Bulletin 94/38**

(84) Designated Contracting States: **AT BE CH DE DK ES FR GB GR IT LI LU NL SE**

(56) References cited:
**EP-A- 71 443**
**FR-A- 344 004**

**Database WPI, accession no. 80-02750c, Derwent Publications Ltd. London, GB**

(73) Proprietor: **TITALYSE S.A.**
**7 rue Marcinhés**
**CH-1217 Meyrin (CH)**

(72) Inventor: **NGUYEN, Trong, Thinh**
**165, route de Grand-Lancy**
**CH-1213 Onex (CH)**
Inventor: **WIAUX, Jean-Pol**
**239, route d'Annecy**
**CH-1257 Croix-de-Rozon (CH)**
Inventor: **RAETZO, Patrick**
**5, rue Henry-Frédéric-Amiel**
**CH-1203 Genève (CH)**

(74) Representative: **Cronin, Brian Harold John**
**42, rue Plantamour**
**CH-1201 Genève (CH)**

EP 0 483 332 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The invention relates to flow-through electrolytic cells for removing heavy metals from waste waters.

### BACKGROUND OF THE INVENTION

Electrolysis is one of the best technologies for removing heavy metals contained in waste waters, particularly those resulting from metal plating operations known as platers' rinse waters. These applications involve a dual problem:

- the process must be able to handle different treated solutions with big differences in chemical composition; and
- the process must be efficient for very dilute solutions in which the concentrations of the active species may range from about a gram per litre to about a milligram per litre.

EP - B - 0'071'443 describes an electrolytic cell using reticulate cathodes made of metallic foams and open structure coated titanium anodes wherein a plurality of spaced anodes and cathodes are arranged as a membrane-free and diaphragm-free cell through which the waste waters flow. Because of the high active surface areas of the reticulate cathodes and the electrolyte flow pattern, the metal removing efficiency of the cell is good and the final concentrations of heavy metals contained in the waste waters can be reduced from a few grams per litre to a few milligrams per litre or less.

However this good performance cannot be obtained for certain types of waste water treatment, i.e. where there is interference between the anodic and cathodic reactions, for example:

1. Treatment of rinse water from chloride containing nickel bath

In rinse water from a chloride containing nickel bath ("Watt" or "Wood" baths), the chloride ions are oxidised at the anodes and dissolved in the solution following the reaction scheme:

$2Cl^- \text{----->} Cl_2 + 2\,e^-$ (1)

$Cl_2 + H_2O \text{<----->} HCl + HOCl$ (2)

Chlorine ($Cl_2$) and hypochlorite ions ($ClO^-$) are well known as strong oxidising agents, and they can react immediately at the cathode surfaces:

$Cl_2 + 2e^- \text{----->} 2Cl^-$ (3)

$ClO^- + 2e^- + H_2O \text{----->} Cl^- + 2OH^-$ (4)

As chlorine and hypochlorite ions are reduced at potentials more positive than that of $Ni^{2+}$, the current efficiency of nickel deposition decreases rapidly with increase of the $Cl^-$ content in solution.

It is known that the most efficient waste water treatment is achieved by eliminating contaminants at the source. Therefore, in plating lines, the waste water treatment device is often coupled with a static rinsing tank and the rinse water is circulated in a closed loop.

In such a case, the chloride content in the rinse water may build up in time and reach high levels. With chloride concentrations as high as 2 to 5 g/l it is not only impossible to deposit nickel, but further problems are observed:

- A high $Cl_2$ and $ClO^-$ content in solution can lead to redissolution of nickel deposited at the cathode accompanied by formation of green precipitates of nickel oxychloride.
- The same reactions can occur with plated nickel coatings on workpieces. This leads to important problems of passivation of the nickel surfaces, then a loss of coherence in subsequent plating steps.

2. Treatment of rinse waters from organic-containing plating baths.

Plating baths used in galvanoplastic industries contain several organic additives acting as brightening, wetting or levelling agents. These organic components are sensitive to anodic oxidation. For example:

Amine group: R-$NH^2$ + $2OH^-$ ---> R-NHOH + $H_2O$ + $2e^-$ (5)

Hydroxyl group: R-$CH_2OH$ + $2OH^-$ --> R-CHO + $2H_2O$ + $2e^-$ (6)

Aldehyde group: R-CHO + $2OH^-$ ---> R-COOH + 1/2O + $2e^-$ (7)

or, generally :

$$\text{organic addition} \xrightarrow{\text{oxidation}} \text{Reducible organics} \quad (8)$$

In a plating line where an electrolytic water treatment device is coupled with a static rinsing tank, the oxidation of organic additives leads to an accumulation of reducible organics in the solution. The latter participate in the cathodic reactions, thereby significantly decreasing the metal deposition efficiency.

3. Treatment of rinse waters containing multi-oxidation-state metallic ions

It is known that waste waters containing multi-oxidation-state metallic ions, such as $Cr^{6+}/Cr^{3+}$, $Fe^{3+}/Fe^{2+}$, $Mn^{3+}/Mn^{2+}$ etc. cannot be treated by a membrane free or diaphragm free electrolytic cell. These ions react reversibly at the anodes and cathodes according to the reaction scheme:

| Cathode | | Anode | |
|---|---|---|---|
| $Cr^{6+} + 3e^-$ | <---> | $Cr^{3+}$ | (9) |
| $Fe^{3+} + e^-$ | <---> | $Fe^{2+}$ | (10) |
| $Mn^{3+} + e^-$ | <---> | $Mn^{2+}$ | (11) |

In rinse waters containing common heavy metals such as $Ni^{2+}$, $Cd^{2+}$, $Zn^{2+}$ etc. a contamination of about 10 to 100 mg/l of these multi-oxidation state ions can completely inhibit the cathodic deposition of the common heavy metals.

4. Destruction of spent Ni electroless baths

Spent baths from the electroless plating of nickel are characterised by a relatively low $Ni^{2+}$ concentration (2 to 5 g/l) and a high concentration of phosphorous compounds (sodium hypophosphite or phosphite up to 200-400 g/l). In an electrolytic cell, the different active species in the bath can react at the electrodes following the reaction scheme:

Cathode: $Ni^{2+}$ + $2e^-$ ---> Ni (12)

Anode: $H_2PO^{2-}$ + $3OH^-$ ---> $HPO_3^{2-}$ + $2H_2O$ + $2e^-$ (13)

$HPO_3^{2-}$ + $3OH^-$ ---> $PO_4^{3-}$ + $2H_2O$ + $2e^-$ (14)

At high concentrations of phosphorous compounds in solution, the formation of polyphosphate at the anodes is possible. This polyphosphate is active at the cathode, and can inhibit nickel deposition. In such a case, the final level of $Ni^{2+}$ is blocked at about 100 - 150 mg/l, i.e. 50 to 80 times the norm of wastewater treatment legislation.

US patent 3'954'594 describes an electrochemical cell divided into anodic and cathodic compartments by an electrically non-conductive membrane or diaphragm made of Nylon or ceramic material. The anodic and cathodic compartments contain electrode beds of suitable conductive particles. In this device, the

membrane or diaphragm acts principally as an electrical separator between the anode and cathode beds. Such separators cannot avoid the problems of back mixing of products formed at the anode into the catholyte. Furthermore, packed bed electrodes are disadvantageous in many respects compared to cathodes made of metal foam.

## SUMMARY OF THE INVENTION

The invention, as set out in the claims, provides an improved flow-through electrolytic cell for removing heavy metals from waste waters which incorporates the advantageous arrangement of metal foam cathodes known from EP - B - 0'071'443 and has a special arrangement for separating the waste water stream (catholyte) from the anolyte, thereby overcoming the above-mentioned limitations and drawbacks of the known device.

A waste water treatment device according to this invention is characterised in that an electrolytic cell comprises a non-conductive box with generally rectangular ceramic pots playing the role of separate anode compartments. A plurality of anodes is placed inside the ceramic pots and a plurality of flow-through cathodes is mounted outside the ceramic pots. The ceramic pots are advantageously made of sintered alumina or zirconia or silica. The sintered ceramic is characterised by an uniform porosity between 20 - 30% with a pore diameter of 0.4 to 1.0 micrometer and a wall thickness of 4 - 8 mm. The ceramic is water permeable. The permeability is characterised by a flow of pure water less than 1 $ml/m^2/hour$ through the wall thickness under a hydraulic pressure of 0.1 bar.

The microscopic porosity is a key characteristic of the diaphragm. Under operating conditions, e.g. without any difference of hydraulic pressure between the anolyte and catholyte, there is no electrolyte flow through the diaphragm; the diffusion of organic species is almost suppressed by the pore diameter lower than 1 micrometer. The problems of back-mixing between the anolyte and catholyte are thus completely suppressed. The flow of electric current is ensured by the migration of small ions such as $H^+$, $OH^-$, $Cl^-$ etc. through the pores filled with a static electrolyte. The width of the ceramic pots is typically about 4 - 6 cm less than the width of the cell box. The pot thickness is conveniently about 6 to 8 cm in order to define an inner volume of from 5 to 20 litres, usually from 8 to 10 liters. The pots usually have the same height as the cell box.

In the cell box, the ceramic pots are inset alternately from opposite sides of the cell housing, leaving gaps that provide a serpentine path for liquid to be treated (catholyte) flowing from the inlet to the outlet through the foam metal cathodes. This arrangement of the pots allows a regular flow of the catholyte relative to the reticulate cathode structures. A similar flow pattern was already described in EP - B - 0'071'443, but only for the case where solid anodes were used.

In the ceramic pots is a separate anolyte: a neutral or slightly acidic electrolyte is convenient, preferably a solution of 10 - 40 g/l of $Na_2SO4$ or 10 - 20 g/l of $H_2SO4$.

Circulation of the anolyte in the ceramic pots is by pumping. The liquid level in the pots may be controlled by the siphon effect, described in detail later. Anolyte is fed into the pots by a circuit with a flow rate of 10 - 20 l/h. This flow rate corresponds to about 1/5th of the total flow delivered by the pump. A restriction (valve etc. ) placed in this circuit allows control of this flow.

The remaining 4/5ths of the anolyte flow is circulated in another circuit where the hydraulic pressure is controlled by a movable portion having an open end. The outlets of the anolyte circuit from the ceramic pots are connected to this circuit by siphons. The liquid level in the pots is then automatically controlled by the portion of the open end. By using this syphon effect, problems of machining the ceramic pots and problems relating to fluid-tightness of the anolyte circuit are totally suppressed.

It is sufficient to maintain the anolyte level at about +/-2 cm of the catholyte level in order to obtain a regime with sufficiently balanced hydraulic pressures.

Anodes with a titanium base coated with an electrocatalytic coating are preferred. A single or double anode can be used for each pot. The anodes are preferably made of expanded mesh.

Two reticulate cathodes made for example of nickel or copper foams are used for each ceramic pot, one parallel to each face of the pot. The cathodes are placed outside the pots, in the cathode compartment of the cell box. The catholyte is thus the waste water or solution to be treated. The catholyte is flowed generally perpendicular to the anolyte flow, through the cathode structures.

The catholyte level is controlled by an overflow placed at the outlet of the cell box.

Because of the chemical composition of the ceramic material, ceramic pots can be used only for solutions having a pH lower than or equal to 8. In strong alkaline solutions, a plastic diaphragm made of porous polypropylene or porous polyethylene with similar characteristics (porosity, pore diameter etc. ), and with the same design, can be used.

Because of the small diameter of the diaphragm pores and because of the particular operating conditions providing no back mixing between the anolyte and catholyte, the cell may have an advantage concerning the formation of halogenated aliphatic organics in waste waters.

Effectively, in waste waters containing both organic additives and chloride ions, the formation of chlorine at the anodes may lead to the formation of toxic products of halogenated aliphatic organics :

Anode: $2Cl^- \text{--->} Cl_2 + 2e^-$
Solution: $R\text{-}CH_2OH + Cl_2 \text{--->} R\text{-}CH_2\text{-}Cl + HOCl$
$R\text{-}CH{=}CH_2 + Cl_2 \text{--->} R\text{-}CHCl\text{-}CH_2Cl$

In the presence of an efficient diaphragm separating the cathode and anode compartments, the contact between the $Cl_2$ and the organic additives may be avoided whereby the formation of halogenated organic products may be suppressed.

## BRIEF DESCRIPTION OF THE DRAWINGS

In the drawings:

Fig. 1 is a schematic plan view of a cell according to the invention, partly in cross-section;

Fig. 2 is a diagram illustrating control of the anolyte level;

Fig. 3 is a graph illustrating the reduction of nickel concentration with time using a cell according to the invention and a similar cell without a diaphragm, for the treatment of an electroless nickel plating bath; and

Fig. 4 is a similar graph illustrating the reduction of nickel concentration with time using a cell according to the invention to treat a static rinsing solution from a Watt's nickel plating bath.

## DETAILED DESCRIPTION

The cell shown in Fig. 1 comprises a generally rectangular, open-topped cell housing 1 of inert material such as cross-linked polyethylene or polypropylene. In the housing 1, a series of generally rectangular, diaphragm-forming, open-topped boxes or pots 2 are offset alternately from opposite sides of the housing 1, as shown.

The ceramic pots 2 are for example made of sintered alumina or zirconia or silica having an uniform porosity of 20 - 30% by volume with a pore diameter of 0.4 to 1.0 micrometer. The pot thickness is conveniently about 4 to 8 cm and each pot has an inner volume of 8 to 10 liters. The pots 2 usually have about the same height as the cell housing 1.

Cathodes 3 made of sheets of foam metal, e.g. nickel, are arranged in the housing 1 is spaced parallel relationship to one another, transverse to the housing 1. In order to maximise the effective cathode surfaces, the cathodes 3 are arranged in pairs between the pots 2, with single cathodes 3 provided at the ends. However, it is also possible to have single cathode sheets arranged between the adjacent pots 2.

Coated titanium mesh anodes 4 are arranged in the pots 2. In this example, two anodes 4 are placed in each pot 2, close to its opposed inner faces.

Anolyte is supplied to the individual pots 2 by an anolyte feed line 5 along one side of the housing 1 and is removed by a line 6 along the other side of housing 1. Catholyte is fed to one end of the housing 1 by a catholyte inlet 7 and is removed from the other end by a catholyte outlet 8.

Hydraulic diffusers 9 are fitted at the two ends of the housing 1 to equalise the flow of catholyte. The diffusers 9 may be sheets of porous polyethylene or polypropylene having a pore size of about 100 micrometers and a porosity of 50-80% by volume.

Catholyte 13 in the housing 1 flows from the inlet 7, through the first diffuser 9, through the first cathode 3 and then passes around the gap between the first pot 2 and the facing side wall of housing 1. The catholyte then passes through the next pair of cathodes 3 and around the gap between the second pot 2 and the opposite side wall of housing 1, and so on, to the outlet diffuser 9 and the outlet 8.

The anolyte flow circuit is illustrated in Fig. 2. Anolyte is pumped from a reservoir 15 by a pump 16, via a valve 17, into a first circuit 18 leading to the anolyte feed 5. The anolyte also circulates in a second circuit 19 which receives anolyte removed from the cell via line 6. The valve 17 is set so that about 1/5th of the anolyte (e.g. a flow rate of 10 - 20 l/h) flows in the first circuit 18 and the remaining 4/5ths flows in the second circuit 19. The second circuit 19 has an open end 20 forming a syphon with the anolyte reservoir 15. By adjusting this open end 20, the level of anolyte 14 can be maintained close to the level of catholyte 13, i.e. to within +/- 2cm.

The feasibility and advantages of the invention will be further illustrated by the following Examples using a laboratory cell similar to that of Fig. 1, but with only a single diaphragm pot and with the catholyte recirculated in a loop to simulate a multi-compartment cell.

EXAMPLE 1

A spent bath from electroless nickel plating was treated by electrolysis in order to remove the metal content. The initial solution contained 7 g/liter of $Ni^{2+}$ under the form of $NiSO_4$, and about 200 g/liter of phosphorous compounds under the form of $NaH_2PO_2$, $Na_2HPO_3$ and $Na_3PO_4$.

The solution was electrolysed under the same experimental conditions in one cell with a diaphragm, and in a similar cell without a diaphragm, i.e. with the pot 2 removed and without a separate anolyte circulation. The diaphragm was a rectangular pot of sintered alumina whose outside measurements were: 600mm high, 300mm wide and 80mm thick. Its wall thickness was nominally 8 mm (10mm at the corners), its porosity about 30% and its maximum pore diameter was 1 micrometer. One titanium activated anode was placed in the pot and two nickel foam cathodes were placed in the cathode compartment parallel to the two faces of the anode. A solution of 10 g/liter of sulfuric acid was used as anolyte and was circulated through the pot at a rate of 15 l/h using a circuit as shown in Fig. 2. A spent nickel electroless bath to be destroyed is used as catholyte and is circulated in a closed loop with a flow rate of about 200 litres/hour. In the second experiment without a diaphragm, the ceramic pot was removed from the cell and the titanium activated anode was directly placed between the two nickel foam cathodes. In this case, there was no separate anolyte flow. In the two cases, a current density of 0.5 Ampere/$dm^2$ was applied to the cathodes, which corresponded to a total current of 500 Ampere for a bath volume of 1 $m^3$. In the case of the diaphragm-less cell, the cell voltage was about 5.5 to 6.0 volts. In the case of the diaphragm cell, the cell voltage was about 6.5 volts; the higher cell voltage of the diaphragm cell was due to the complementary ohmic drop of the diaphragm.

The nickel concentration profile versus electrolysis duration is illustrated in Fig. 3. These results show that a better current efficiency was obtained with the diaphragm cell, where the nickel content can be decreased to a level lower than 1 mg/liter. In the case of the diaphragm-less cell, the minimum nickel content is blocked at about 450 - 500 mg/litre, even after a long duration of electrolysis. This is due to the reversibility of the reactions of phosphorous compounds at the cathodes and anodes in the diaphragm-less cell.

EXAMPLE 2

A rinsing solution coming from a nickel plating line using a Watt's bath (a nickel bath based on $NiSO_4/NiCl_2$ and HCl), was treated by electrolysis in order to be recycled to the rinsing tank. The initial metal and chloride concentrations in the solution were respectively 4.25 g/liter of $Ni^{2+}$ and 12.2 g/liter of $Cl^-$.

Electrolysis was carried out in diaphragm and diaphragmless cells under the same experimental conditions as described in Example 1.

In the diaphragm-less cell, after 2 hours of electrolysis green-black sludges were formed at the cathodes and in the solution. The nickel foam cathodes were partially dissolved under the sludges. Voltametry analysis showed that under anodic polarisation, chloride ions are oxidised to chlorine ($Cl_2$), which is partially soluble in the solution. The soluble chlorine in the solution can be reduced at the cathode at a potential more positive than that of the dissolution of Ni, or can be transformed into HCl and HOCl. The depolarisation effect of the cathodes due to the reduction of chlorine, and the presence of $ClO^-$ ions are the cause of the dissolution of the nickel foam cathode and the formation of the green oxychloride sludges.

In the case of the diaphragm cell, the decrease of nickel content in the solution is illustrated in Fig. 4. After 100 hours of electrolysis, or a electrical charge of 30 ampere hour/liter, the nickel content in the solution was reduced from 4.25 g/liter to less than 0.001 g/liter. No corresponding curve could be produced for the diaphragmless cell because of the reported sludge formation on start-up.

The invention applies in general to the treatment of rinse waters from halide-containing baths of various metals such as $ZnCl_2$, $NiCl_2$, $CdCl_2$ and so on, rinse waters from organic-containing plating baths, rinse waters containing multi-oxidation-state metallic ions, as well as spent baths from the electroless plating of nickel as described in Example 1. A further application is the treatment of waste solutions containing a mixture of metals, such as eluates coming from columns wherein ion-exchange resins are regenerated.

## Claims

1. An electrolytic cell having flow-through cathodes for removing heavy metals from waste water solutions, comprising:
   - an inert cell housing (1) having at one end an inlet (7) for solution to be treated and at the other end an outlet (8) for treated solution;
   - a plurality of flow-through cathodes (3) made of sheets of foam metal arranged in the cell housing in spaced parallel relationship to one another transverse to the direction of flow of the treated solution, through said cathodes, from the inlet to the outlet, the foam metal cathodes (3) extending substantially over the entire width of the cell housing (1); and
   - one or a plurality of anodes (4) interleaved between the foam metal cathodes (3);

   characterised in that:
   - each anode (4) is contained in a diaphragm-forming box (2) of microporous ion-permeable material, the or each box forming an anode compartment and having means (5,6) for circulating anolyte therethrough, from and back to an external circuit;
   - the or each anode-compartment-forming box (2) does not extend all the way across the cell housing (1) and is offset from a side of the cell housing to provide a path for liquid to be treated (catholyte) flowing from the inlet (7) to the outlet (8) through the foam metal cathodes (3), which path is a serpentine path when several boxes are provided, by offsetting boxes alternately from opposite sides of the cell housing; and
   - means (20) are provided for controlling the anolyte and catholyte heads to prevent unwanted mixing of the anolyte and catholyte via the microporous ion-permeable material.

2. The electrolytic cell of claim 1 wherein the microporous ion-permeable material forming the anode boxes (2) has a uniform porosity between 20 and 30 % by volume with a pore diameter in the range 0.4 to 1.0 micrometer and a wall thickness of 4 to 8 mm.

3. The electrolytic cell of claim 1 or 2 wherein the inner volume of each box (2) defining an anode compartment is from 5 to 20 litres.

4. The electrolytic cell of claim 1, 2 or 3, comprising a pump (16) for circulating anolyte in a first circuit (18) including the anolyte compartments, and in a second circuit (19) provided with syphon means (20) for maintaining the anolyte head at a desired value corresponding at least approximately to the catholyte level.

5. Use of the electrolytic cell of any preceding claim for the treatment of rinse waters from halide-containing metal baths, rinse waters from organic-containing plating baths, rinse waters containing multi-oxidation-state metallic ions, spent baths from the electroless plating of nickel, or eluates from the regeneration of ion-exchange resins.

## Patentansprüche

1. Elektrolytische Zelle mit Durchflußkathoden zur Entfernung von Schwermetallen aus Abwasserlösungen, die:
   - ein inertes Zellgehäuse (1), das an einem Ende einen Einlaß (7) für die zu behandelnde Lösung und am anderen Ende einen Auslaß (8) für die behandelte Lösung aufweist,
   - eine Vielzahl von Durchflußkathoden (3), die aus dünnen Platten aus Schaummetall hergestellt sind, die in dem Zellgehäuse mit Abstand, parallel zueinander und quer zur Fließrichtung der behandelten Lösung durch die Kathoden vom Auslaß zum Einlaß angeordnet sind, wobei die Schaummetallkathoden (3) sich im wesentlichen über die Gesamtbreite des Zellgehäuses (1) erstrecken, und
   - eine oder eine Vielfalt von Anoden (4) umfaßt, die zwischen den Schaummetallkathoden (3) verschachtelt angeordnet sind,

   dadurch gekennzeichnet,
   - jede Anode (4) in einem ein Diaphragma bildenden Kasten (2) aus mikroporösem, ionendurchlässigen Material enthalten ist, wobei der oder jeder Kasten ein Anodenraum bildet und Mittel (5, 6) zum Zirkulieren von Anolyt durch diese hindurch von und zurück zu einem externen Kreislauf aufweist,

- der oder jeder einen Anodenraum bildende Kasten (2) sich nicht über den gesamten Weg quer zum Zellgehause (1) erstreckt und von einer Seite des Zellgehäuses abgesetzt ist, um einen Weg für zu behandelnde Flüssigkeit (Katholyt) zu liefern, die vom Einlaß (7) zum Auslaß (8) durch die Schaummetallkathoden (3) fließt, wobei dieser Weg ein Serpentinenweg ist, wenn mehrere Kästen vorgesehen und die Kästen alternierend von entgegengesetzten Seiten des Zellgehäuses abgerückt sind, und
- Mittel (20) zur Kontrolle der Anolyt- und Katholytköpfe vorgesehen sind, um ein unerwünschtes Mischen von Anolyt und Katholyt über das mikroporöse, ionendurchlässige Material zu vermeiden.

**2.** Elektrolytische Zelle nach Anspruch 1, bei der das mikroporöse, ionendurchlässige Material, das die Anodenkästen (2) bildet, eine gleichmaßige Porosität zwischen 20 und 30 Vol.-% bei einem Porendurchmesser im Bereich von 0,4 bis 1,0 µm und einer Wanddicke von 4 bis 8 mm aufweist.

**3.** Elektrolytische Zelle nach Anspruch 1 oder 2, bei der das Innenvolumen jedes Kastens (2), der ein Anodenfach definiert, 5 bis 20 Liter ist.

**4.** Elektrolytische Zelle nach Anspruch 1, 2 oder 3, die eine Pumpe (16) zum Zirkulieren von Anolyt in einem ersten Kreislauf (18), einschließlich den Anolyträumen, und in einem zweiten Kreislauf (19) umfaßt, der mit Syphonmitteln (20) zum Halten des Anolytkopfes bei einem gewünschten Wert ausgestattet ist, der zumindest ungefähr dem Katolytniveau entspricht.

**5.** Verwendung der elektrolytischen Zelle nach einem der vorhergehenden Ansprüche zur Behandlung von Spülwasser aus Halogen enthaltenden Metallbädern, Spülwasser aus organische Substanzen enthaltenden Plattierungsbädern, Spülwasser, das Metallionen mit mehreren Oxidationszuständen enthält, gebrauchten Bädern aus der stromlosen Plattierung von Nickel oder Eluaten aus der Regenerierung von Ionenaustauschharzen.

**Revendications**

**1.** Une cellule électrolytique ayant des cathodes à débit traversant pour l'extraction de métaux lourds de solutions d'eaux usées, comprenant :

- un boîtier de cellule inerte (1) ayant, à une extrémité, une entrée (7) pour la solution à traiter et, à l'autre extrémité, une sortie (8) pour la solution traitée;
- plusieurs cathodes à débit traversant (3) composées de feuilles de mousse métallique disposées dans le boîtier de cellule parallèlement, espacées les unes des autres, et transversalement par rapport à la direction du flux de solution traitée, à travers lesdites cathodes, de l'entrée à la sortie, les cathodes en mousse métallique (3) s'étendant substantiellement sur la largeur entière du boîtier de la cellule (1); et
- une ou plusieurs anodes (4) intercalées entre les cathodes en mousse métallique (3);

caractérisée en ce que :

- chaque anode (4) est contenue dans une boîte formant un diaphragme (2) en matériau microporeux perméable aux ions, la ou chaque boîte formant un compartiment pour l'anode et ayant des moyens (5,6) pour faire circuler l'anolyte à travers elle, de et vers un circuit externe;
- la ou chaque boîte (2) formant un compartiment pour que l'anode ne s'étende pas entièrement à travers toute la largeur du boîtier de la cellule (1) et soit écartée d'un côté du boîtier de la cellule pour fournir un passage pour le liquide à traiter (catholyte) circulant de l'entrée (7) à la sortie (8) à travers les cathodes en mousse métallique (3), lequel passage est un passage en serpentin lorsqu'il y a plusieurs boîtes, en écartant les boîtes alternativement des côtés opposés du boîtier de cellule; et
- des moyens (20) sont fournis pour contrôler la pression d'anolyte et de catholyte afin éviter tout mélange indésirable de l'anolyte et du catholyte par le matériau microporeux perméable aux ions.

**2.** La cellule électrolytique de la revendication 1, dans laquelle le matériau microporeux perméable aux ions formant les boîtes d'anodes (2) a une porosité uniforme entre 20 et 30 % par volume, avec un diamètre de pore dans l'intervalle de 0,4 à 1,0 micromètre et une épaisseur de mur de 4 à 8 mm.

3. La cellule électrolytique de la revendication 1 ou 2, dans laquelle le volume intérieur de chaque boîte (2) définissant un compartiment d'anode est de 5 à 20 litres.

4. La cellule électrolytique de la revendication 1, 2 ou 3, comprenant une pompe (16) pour faire circuler l'anolyte dans un premier circuit (18) comprenant les compartiments d'anolyte, et un deuxième circuit (19) doté de siphons (20) pour maintenir le niveau d'anolyte à la valeur désirée correspondant au moins approximativement au niveau de catholyte.

5. L'utilisation de la cellule électrolytique de n'importe quelle revendication précédente, pour le traitement d'eaux de rinçage de bains métalliques contenant des halogénures, d'eaux de rinçage de bains de plaquage contenant des composés organiques, d'eaux de rinçage contenant des ions métalliques dans plusieurs états d'oxydation, de bains usés pour le plaquage non galvanique de nickel, ou d'éluats provenant de la régénération de résines échangeuses d'ions.

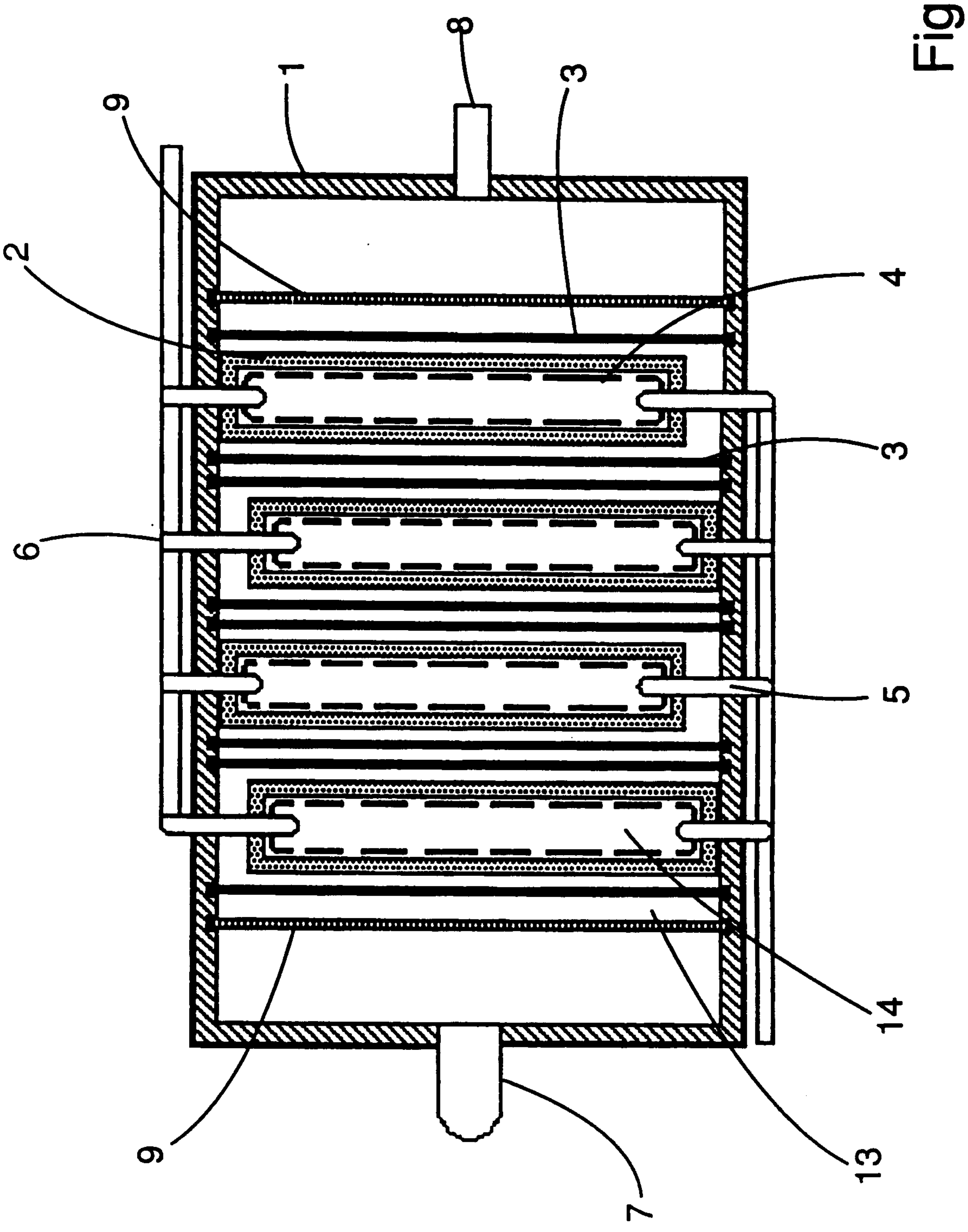


Fig. 1

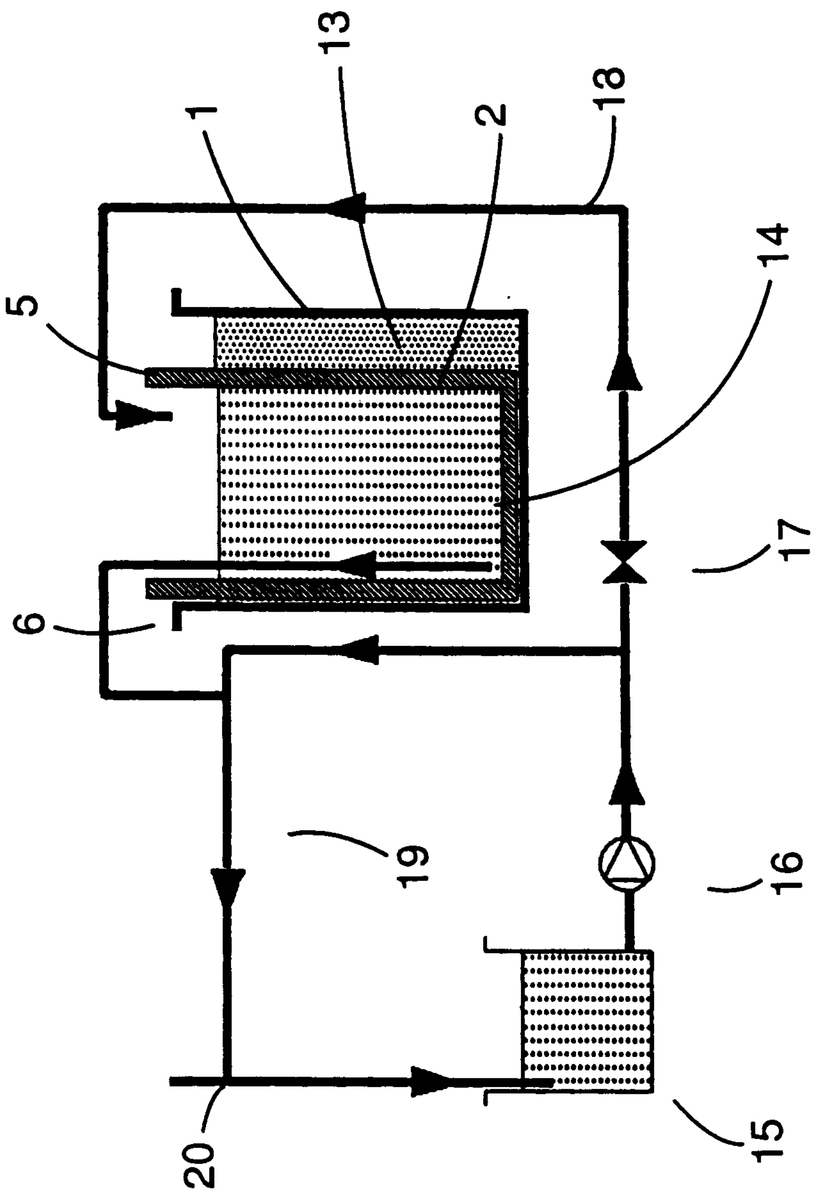


Fig. 2

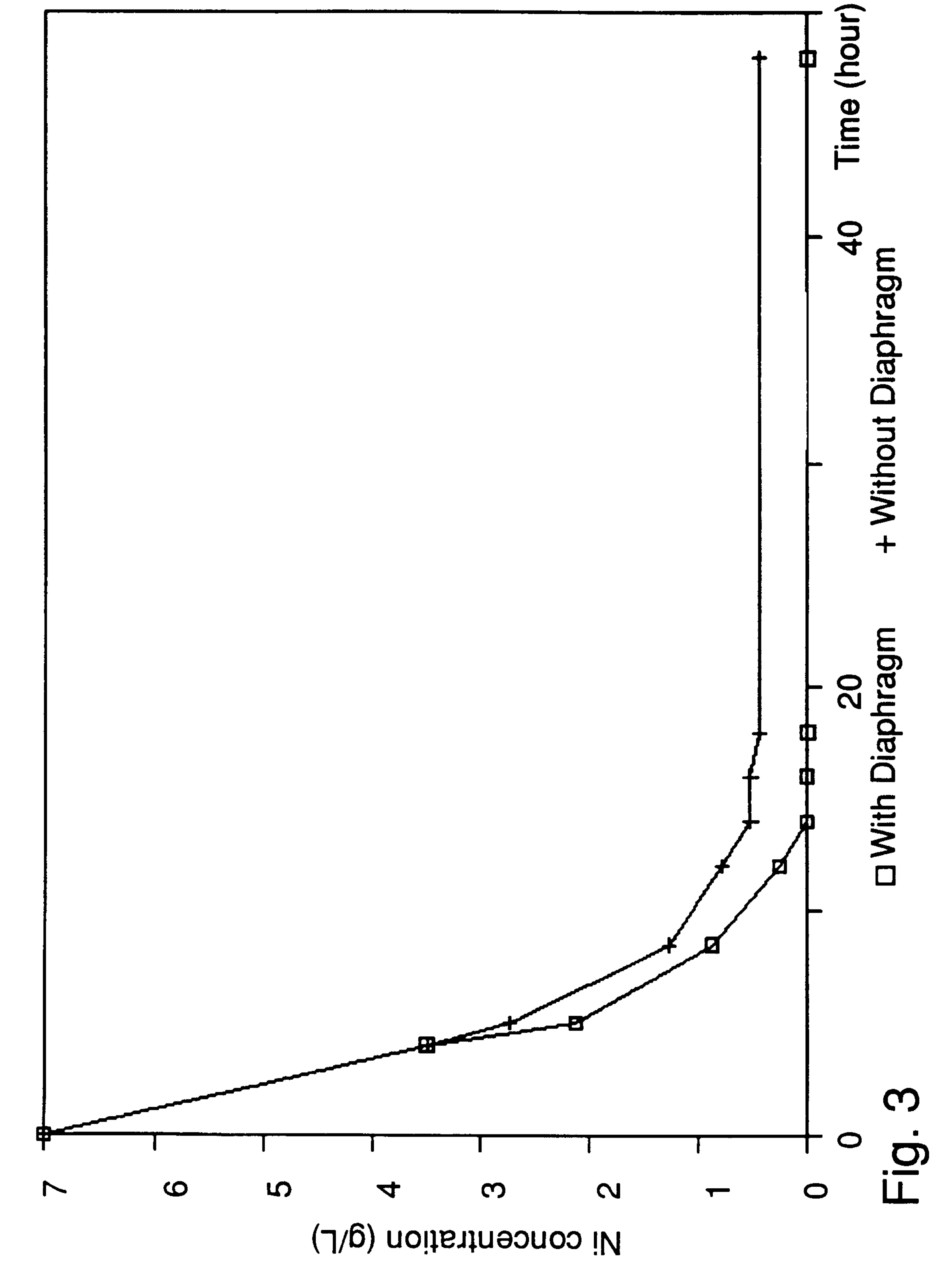
Ni concentration (g/L)
0
1
2
3
4
5
6
7
0
20
40
Time (hour)
□ With Diaphragm
+ Without Diaphragm

Fig. 3

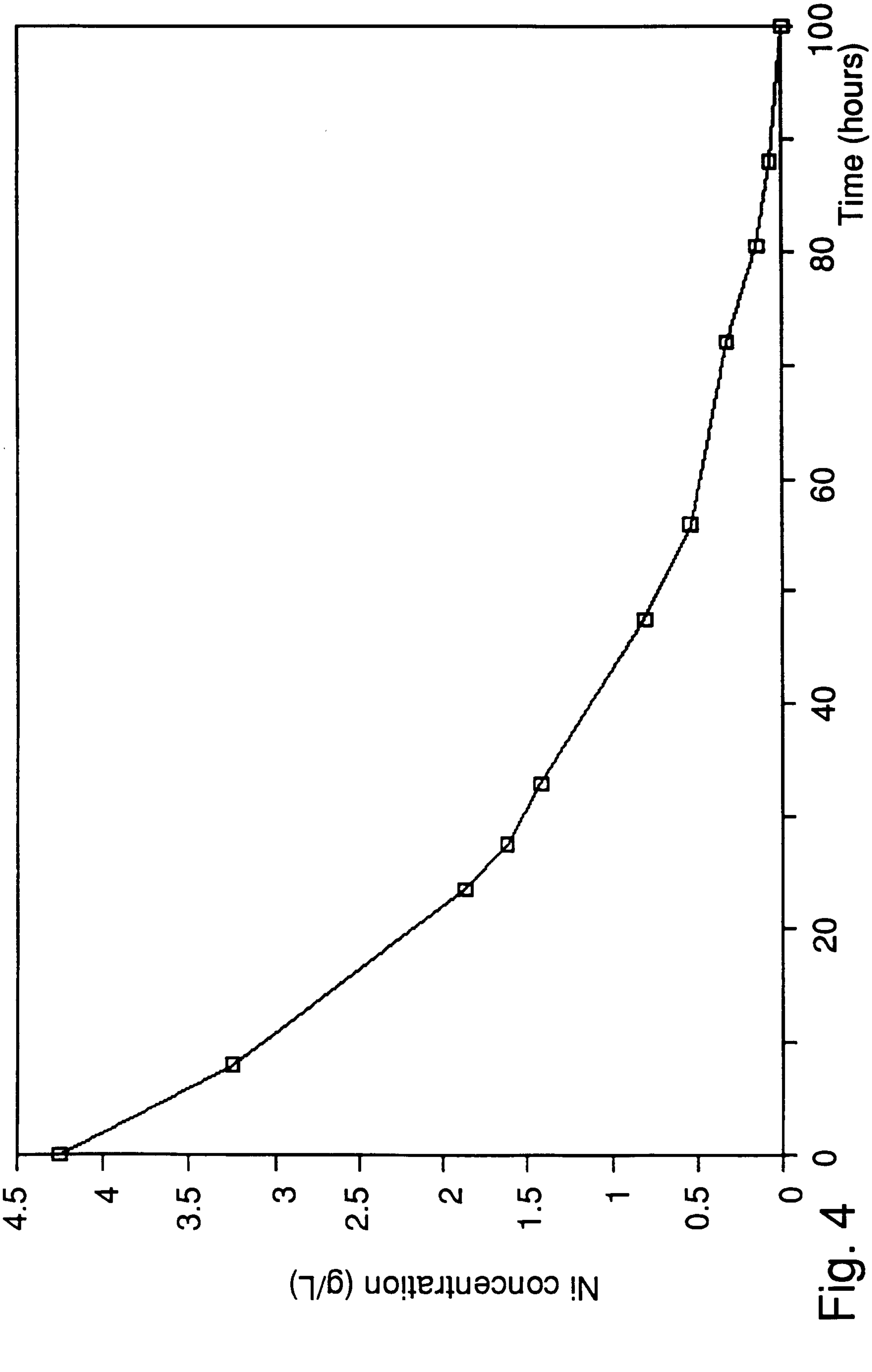
Ni concentration (g/L)
4.5
4
3.5
3
2.5
2
1.5
1
0.5
0
Time (hours)
0
20
40
60
80
100

Fig. 4